# EUROPÄISCHE PATENTANMELDUNG

(11) **EP 1 557 237 A2**
(43) Veröffentlichungstag der Anmeldung: **27.07.2005**
(21) Anmeldenummer: 05000976.0
(22) Anmeldetag: 19.01.2005
(51) Int. Cl.: B23Q 1/38, B23Q 1/62

(54) **Werkzeugmaschine mit einem hydrostatischen Gleitfilm**

(30) Priorität: 20.01.2004 DE 102004004020
(71) Anmelder: Index-Werke GmbH & Co. KG Hahn & Tessky, 73730 Esslingen (DE)
(72) Erfinder: Tüllmann, Udo, Dr.-Ing., 73728 Esslingen (DE)
(74) Vertreter: HOEGER, STELLRECHT & PARTNER Patentanwälte

(57) **Zusammenfassung**

Um eine Werkzeugmaschine umfassend ein Maschinengestell (10), eine gegenüber dem Maschinengestell mindestens in einer zweidimensionalen Bewegungsebene (X,Z) bewegbare Bearbeitungseinheit (20) und eine Führungseinrichtung zur Führung der Bearbeitungseinheit in der zweidimensionalen Bewegungsebene mit einer eine Basisführungsfläche (44) aufweisenden Führungsbasis (42) und mit einem die Bearbeitungseinheit tragenden Fußelement (46), welches eine der Basisführungsfläche zugewandte Fußführungsfläche (48) aufweist, derart zu verbessern, daß die Führungseinrichtung möglichst einfach herstellbar ist, wird vorgeschlagen, daß zwischen der Fußführungsfläche und der Basisführungsfläche ein hydrostatischer Gleitfilm (50) vorgesehen ist, auf welchem das Fußelement mit seiner Fußführungsfläche relativ zur Führungsbasis gleitet.

## Beschreibung

Die Erfindung betrifft eine Werkzeugmaschine umfassend ein Maschinengestell, eine gegenüber dem Maschinengestell mindestens in einer zweidimensionalen Bewegungsebene bewegbare Bearbeitungseinheit und eine Führungseinrichtung zur Führung der Bearbeitungseinheit in der zweidimensionalen Bewegungsebene mit einer eine Basisführungsfläche aufweisenden Führungsbasis und mit einem die Bearbeitungseinheit tragenden Fußelement, welches eine der Basisführungsfläche zugewandte Fußführungsfläche aufweist.

Eine derartige Werkzeugmaschine ist beispielsweise aus der WO 01/81040 bekannt. Diese Lösung erfordert jedoch einen erheblichen konstruktiven Aufwand hinsichtlich der Ausbildung der Führungseinrichtung.

Der Erfindung liegt daher die Aufgabe zugrunde, eine Werkzeugmaschine der gattungsgemäßen Art derart zu verbessern, daß die Führungseinrichtung möglichst einfach herstellbar ist.

Diese Aufgabe wird bei einer Werkzeugmaschine der eingangs beschriebenen Art erfindungsgemäß dadurch gelöst, daß zwischen der Fußführungsfläche und der Basisführungsfläche ein hydrostatischer Gleitfilm vorgesehen ist, auf welchem das Fußelement mit seiner Fußführungsfläche relativ zur Führungsbasis gleitet.

Der Vorteil der erfindungsgemäßen Lösung ist darin zu sehen, daß ein derartiger hydrostatischer Gleitfilm aufgrund seiner Eigenschaften eine präzise Führung des Fußelements über der Führungsbasis gewährleistet und andererseits noch den Vorteil hoher Dämpfung bietet.

Besonders vorteilhaft ist es dabei, wenn die Basisführungsfläche in jeder der beiden die Bewegungsebene aufspannenden Bewegungsrichtungen eine Ausdehnung aufweist, die größer als die maximale Ausdehnung der Fußführungsfläche in dieser Richtung ist.

Besonders vorteilhaft ist es dabei, wenn die Ausdehnung der Basisführungsfläche mindestens das 1,5-fache der maximalen Ausdehnung der Fußführungsfläche in der jeweiligen Richtung beträgt.

Hinsichtlich der Ausführung der Basisführungsfläche wurden bislang keine näheren Angaben gemacht. So wäre es denkbar, die Basisführungsfläche aus mehreren Teilflächen zusammenzusetzen.

Besonders zweckmäßig ist es jedoch, insbesondere im Hinblick auf die Führungseigenschaften bei einem hydrostatischen Gleitfilm, wenn die Basisführungsfläche eine zusammenhängende Fläche ist.

Ferner wäre es denkbar, die Basisführungsfläche mit Durchbrüchen zu versehen. Dies würde jedoch ebenfalls die Führungseigenschaften, insbesondere bei einem hydrostatischen Gleitfilm reduzieren. Aus diesem Grund ist vorgesehen, daß die Basisführungsfläche durchbruchsfrei ausgebildet ist.

Um keinerlei Störungen des hydrostatischen Gleitfilms in Kauf nehmen zu müssen, ist es besonders günstig, wenn die Basisführungsfläche ausnehmungsfrei zusammenhängend ausgebildet ist, so daß jede Art von Ausnehmungen oder Vertiefungen in der Basisführungsfläche fehlen und folglich die Basisführungsfläche eine durchgehende und störungsfrei verlaufende zusammenhängende Fläche darstellt.

Um einen hydrostatischen Gleitfilm ausbilden zu können, ist vorzugsweise vorgesehen, daß das Fußelement mit mindestens einer Zuführung für ein den hydrostatischen Gleitfilm bildendes Gleitmedium versehen ist.

Eine derartige einzelne Zuführung wäre prinzipiell zur Ausbildung eines hydrostatischen Gleitfilms ausreichend.

Für eine besonders stabile Ausbildung eines hydrostatischen Gleitfilms ist es jedoch günstig, wenn das Fußelement mit mehreren Zuführungen für das Gleitmedium versehen ist.

Insbesondere zur Gleichmäßigkeit der Ausbildung des hydrostatischen Gleitfilms und somit gleichmäßiger Abstützung des Fußelements ist es günstig, wenn das Fußelement mit mindestens drei Zuführungen für das Gleitmedium versehen sind.

Die Zuführungen für das Gleitmedium können in einem mittigen Bereich des Fußelements angeordnet sein. Besonders stabil läßt sich das Fußelement jedoch führen, wenn die Zuführungen für das Gleitmedium in einem außenliegenden Bereich der Fußführungsfläche angeordnet sind.

Um eine stabile Ausbildung eines Gleitfilms mit definierter Filmdicke zu gewährleisten ist vorzugsweise vorgesehen, daß der mindestens einen Zuführung für Gleitmedium eine Einstelleinrichtung für eine Einstellung einer Zuflußmenge des Gleitmediums zugeordnet ist.

Vorzugsweise erfolgt dabei die Einstellung der Filmdicke des hydrostatischen Gleitfilms derart, daß dieser eine einem unmittelbaren Aufliegen der Fußführungsfläche auf der Basisführungsfläche entgegenwirkende Abhebekraft erzeugt, die ständig wirksam ist und somit während des Betriebs der erfindungsgemäßen Werkzeugmaschine das Aufliegen der Fußführungsfläche auf der Basisführungsfläche verhindert.

Vorzugsweise wird der hydrostatische Gleitfilm so ausgebildet, daß die Abhebekraft eine auf das Fußelement wirkende Niederhaltekraft kompensiert, welche zumindest eine senkrecht auf der Basisführungsfläche stehende Komponente der Gewichtskraft der Bearbeitungseinheit umfaßt.

Vorzugsweise verhält sich der hydrostatische Gleitfilm derart, daß die Abhebekraft durch zerstörungsfreie Kompression des hydrostatischen Gleitfilms soweit vergrößerbar ist, daß mit der Abhebekraft sämtliche, bei einer Bearbeitung eines Werkstücks auftretenden Niederhaltekräfte kompensierbar sind.

Besonders günstig ist es, wenn der hydrostatische Gleitfilm im bearbeitungsfreien Zustand durch eine derart große Niederhaltekraft beaufschlagt ist, daß der Anstieg der Niederhaltekraft bei Bearbeitung des Werkstücks zu einer Verringerung der Dicke des hydrostatischen Gleitfilms um ungefähr 50% oder weniger, noch besser um ungefähr 30% oder weniger und besonders günstig um ungefähr 15% oder weniger führt.

Im Zusammenhang mit der bisherigen Erläuterung der einzelnen Ausführungsbeispiele der erfindungsgemäßen Werkzeugmaschine wurde keinerlei Aussage darüber gemacht, ob außer der Gewichtskraft weitere Kräfte auf das Fußelement wirken sollen, um dieses in Anlage an der Führungsbasis zu halten.

Prinzipiell ist eine Einwirkung der Gewichtskraft ausreichend.

Die Stabilisierung der Bearbeitungseinheit mit dem Fußelement auf der Führungsbasis läßt sich jedoch noch verbessern, wenn eine das Fußelement und die Führungsbasis mit einer der Abhebekraft entgegenwirkenden Anziehungskraft beaufschlagende Halteeinrichtung vorgesehen ist.

Eine derartige Halteeinrichtung könnte prinzipiell eine mechanische Halteeinrichtung sein, welche einerseits an dem Maschinengestell angreift und andererseits die Bearbeitungseinheit und/oder das Fußelement beaufschlagt.

Eine derartige mechanische Halteeinrichtung hat jedoch hinsichtlich des räumlichen und baulichen Aufwandes Nachteile.

Aus diesem Grund ist es besonders günstig, wenn die Halteeinrichtung berührungslos zwischen der Führungsbasis und dem Fußelement wirkt.

Eine derartige berührungslose Wirkung läßt sich beispielsweise dadurch erreichen, daß die Halteeinrichtung zwischen der Führungsbasis und dem Fußelement ein Unterdruckpolster erzeugt, welches das Fußelement in Richtung der Führungsbasis beaufschlagt.

Um eine definierte Kraftwirkung durch das Unterdruckpolster zu erreichen, sollte dessen Flächenausdehnung in Richtung der Basisführungsfläche und der Fußführungsfläche möglichst definiert sein.

Aus diesem Grund ist vorzugsweise vorgesehen, daß das Unterdruckpolster durch eine Ausnehmung im Fußelement hinsichtlich seiner Ausdehnung in Richtung der Basisführungsfläche und der Fußführungsfläche festgelegt ist.

Hinsichtlich der relativen Anordnung der Zuführungen und der Ausnehmung im Fußelement sind die unterschiedlichsten Möglichkeiten denkbar. Beispielsweise ist es denkbar, die das Unterdruckpolster definierende Ausnehmung um die Zuführungen für das Gleitmedium herum anzuordnen.

Hinsichtlich einer stabilen Führung und einer guten Abdichtung des Unterdruckpolsters durch den hydrostatischen Gleitfilm ist es jedoch besonders günstig, wenn die Zuführungen für das Gleitmedium um die Ausnehmung herum angeordnet sind, so daß dadurch auch um die Ausnehmung herum der hydrostatische Gleitfilm zu einer Abdichtung des Unterdruckpolsters beiträgt.

Im Zusammenhang mit der bislang beschriebenen Halteeinrichtung war lediglich von einem einzigen Unterdruckpolster die Rede. Es ist aber auch denkbar, mehrere Unterdruckpolster verteilt über die Fußführungsfläche vorzusehen.

Eine andere Ausführungsform einer erfindungsgemäßen Halteeinrichtung sieht vor, daß die Halteeinrichtung ergänzend oder alternativ zum Vorsehen des Unterdruckpolsters die Anziehungskräfte durch magnetische Anziehung erzeugt.

Eine derartige magnetische Anziehung läßt sich entweder durch vorgesehene Permanentmagnete erreichen oder auch dadurch, daß die Halteeinrichtung mindestens einen Elektromagnet umfaßt, welcher das magnetische Feld erzeugt.

Ein derartiger Elektromagnet könnte beispielsweise ein in dem Fußelement oder in der Führungsbasis vorgesehener Elektromagnet sein, welcher ein auf die Führungsbasis bzw. das Fußelement wirkendes Magnetfeld zur Erzeugung der Anziehungskraft erzeugt.

Ein derartiger Elektromagnet hat den Vorteil, daß das von diesem erzeugte Magnetfeld steuerbar und somit die gewünschte Anziehungskraft einstellbar ist.

Eine besonders günstige Lösung zur Erzeugung einer magnetischen Anziehung zwischen der Führungsbasis und dem Fußelement sieht vor, daß die Halteeinrichtung mindestens ein Primärteil und mindestens ein Sekundärteil aufweist, von denen eines in der Führungsbasis und das andere in dem Fußelement angeordnet ist.

Besonders günstig ist es, wenn das mindestens eine Sekundärteil in dem Fußelement angeordnet ist und das mindestens eine Primärteil in der Führungsbasis, so daß nicht die Notwendigkeit besteht, die Ansteuerung des Primärteils im bewegten System vorzunehmen, sondern im relativ zum Maschinengestell stationären Teil der Führungseinrichtung.

Zweckmäßigerweise ist dabei das Sekundärteil so aufgebaut, daß es mehrere Polelemente umfaßt.

Die einzelnen Polelemente des Sekundärteils können dabei entweder durch Permanentmagnete oder Kurzschlußwicklungen realisiert sein.

Ferner ist vorzugsweise vorgesehen, daß das Primärteil mehrere Polelemente umfaßt, die üblicherweise durch bestrombare Wicklungen mit Polschuhköpfen realisiert sind.

Um jeweils nur die Polelemente, die unmittelbar auf das Sekundärteil wirken, bestromen zu können, sind vorzugsweise die Polelemente einzeln ansteuerbar.

Im Zusammenhang mit der bisherigen Beschreibung der erfindungsgemäßen Werkzeugmaschine wurde nicht näher darauf eingegangen, wie die Bearbeitungseinheit relativ zum Maschinengestell bewegbar sein soll.

Vorzugsweise ist dabei vorgesehen, daß die Bearbeitungseinheit und das Fußelement durch eine Antriebseinrichtung in der zweidimensionalen Bewegungsebene bewegbar sind.

Eine derartige Antriebseinrichtung kann in unterschiedlichster Weise ausgeführt sein.

Beispielsweise wäre es denkbar, mechanische Linearantriebe einzusetzen und zwei mechanische Linearantriebe zu koppeln.

Zur Bewegung der Bearbeitungseinheit in der Bewegungsebene ist es jedoch besonders günstig, wenn die Antriebseinrichtung stabkinematische Elemente umfaßt, mit denen die Bearbeitungseinheit in mindestens einer Bewegungsrichtung bewegbar ist.

Noch vorteilhafter ist es, wenn die Antriebseinrichtung als zweidimensional wirksamer stabkinematischer Antrieb ausgebildet ist.

Bei einem derartigen zweidimensional wirksamen stabkinematischen Antrieb gibt es unterschiedliche Möglichkeiten diesen anzuordnen.

Aus räumlichen Gründen ist es besonders günstig, wenn der stabkinematische Antrieb auf einer einem in Arbeitsstellung stehenden Werkzeug gegenüberliegenden Seite der Bearbeitungseinheit angeordnet ist.

Ein derartiger stabkinematischer Antrieb kann in unterschiedlichster Art und Weise realisiert sein.

Eine vorteilhafte Realisierungsform sieht vor, daß der stabkinematische Antrieb gelenkig gelagerte und längenveränderbare Antriebsstreben aufweist.

Eine andere Realisierungsform sieht vor, daß der stabkinematische Antrieb gelenkig gelagerte längeninvariante jedoch auf einer Linearführung mit Schlitten relativ zueinander bewegbare Antriebsstreben aufweist.

Eine andere Möglichkeit, die Antriebseinrichtung zu realisieren sieht vor, daß die mindestens ein Primärteil und mindestens ein Sekundärteil aufweisende Halteeinrichtung als Linearantrieb der Antriebseinrichtung betreibbar ist.

Es ist sogar denkbar, das Primärteil und das Sekundärteil derart auszubilden, daß die Halteeinrichtung als zweidimensionaler Linearantrieb der Antriebseinrichtung betreibbar ist.

Damit könnte beispielsweise die Antriebseinrichtung so ausgebildet sein, daß sie zur Bewegung in einer Richtung den durch das Primärteil und Sekundärteil gebildete Linearantrieb einsetzt und zur Bewegung in einer Richtung quer zu dieser stabkinematische Elemente einsetzt.

Eine andere vorteilhafte Lösung sieht jedoch bei geeigneter Ausbildung von Primärteil und Sekundärteil vor, daß die mindestens ein Primärteil und mindestens ein Sekundärteil aufweisende Halteeinrichtung als zweidimensionale Antriebseinrichtung betreibbar ist.

Dabei sind beispielsweise die Polelemente des Sekundärteils und des Primärteils schachbrettartig auszubilden, wie dies beispielsweise in der deutschen Patentanmeldung DE 102 67 796.1-14 beschrieben ist.

Darüber hinaus besteht bei geeigneter Ansteuerung der Polelemente auch noch die Möglichkeit, die Bearbeitungseinheit um eine Achse zu drehen, so daß die Bearbeitungseinheit selbst in der Art eines Revolverkopfes ausgebildet werden kann und durch Drehen der Bearbeitungseinheit um eine senkrecht zur Basisführungsfläche stehende Achse unterschiedliche Werkzeuge in Einsatz bringbar sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines ersten Ausführungsbeispiels einer erfindungsgemäßen Werkzeugmaschine in Richtung eines Pfeils B in Fig. 2 ohne Antriebseinrichtung;
- Fig. 2: eine Draufsicht auf das erste Ausführungsbeispiel in Richtung des Pfeils A in Fig. 1;
- Fig. 3: eine vergrößerte ausschnittsweise Darstellung ähnlich Fig. 1 eines Teilbereichs eines in Fig. 1 dargestellten Fußelements;
- Fig. 4: eine grafische Darstellung einer vom hydrostatischen Gleitfilm bei der erfindungsgemäßen Lösung erzeugten Abhebekraft in Abhängigkeit von dessen Filmdicke und eine Darstellung von einzelnen Komponenten einer von der Abhebekraft kompensierten Niederhaltekraft;
- Fig. 5: eine Darstellung des ersten Ausführungsbeispiels ähnlich Fig. 2 mit einer erfindungsgemäßen Antriebseinrichtung;
- Fig. 6: einen Schnitt längs Linie 6-6 in Fig. 5;
- Fig. 7: einen Schnitt ähnlich Fig. 6 durch ein zweites Ausführungsbeispiel einer erfindungsgemäßen Werkzeugmaschine;
- Fig. 8: eine Draufsicht ähnlich Fig. 5 auf eine Antriebseinrichtung eines dritten Ausführungsbeispiels einer erfindungsgemäßen Werkzeugmaschine;
- Fig. 9: eine Ansicht ähnlich Fig. 1 eines vierten Ausführungsbeispiels der erfindungsgemäßen Werkzeugmaschine;
- Fig. 10: eine Ansicht ähnlich Fig. 2 des vierten Ausführungsbeispiels der erfindungsgemäßen Werkzeugmaschine;
- Fig. 11: eine Ansicht ähnlich Fig. 1 eines fünften Ausführungsbeispiels einer erfindungsgemäßen Werkzeugmaschine allerdings ohne Werkstückspindel;
- Fig. 12: eine Darstellung ähnlich Fig. 2 beim fünften Ausführungsbeispiel der erfindungsgemäßen Werkzeugmaschine;
- Fig. 13: eine ausschnittsweise vergrößerte Darstellung ähnlich Fig. 3 beim fünften Ausführungsbeispiel der erfindungsgemäßen Werkzeugmaschine;
- Fig. 14: eine Darstellung ähnlich Fig. 1 eines sechsten Ausführungsbeispiels der erfindungsgemäßen Werkzeugmaschine;
- Fig. 15: eine Darstellung ähnlich Fig. 2 des sechsten Ausführungsbeispiels der erfindungsgemäßen Werkzeugmaschine und
- Fig. 16: eine Darstellung ähnlich Fig. 1 eines siebten Ausführungsbeispiels der erfindungsgemäßen Werkzeugmaschine.

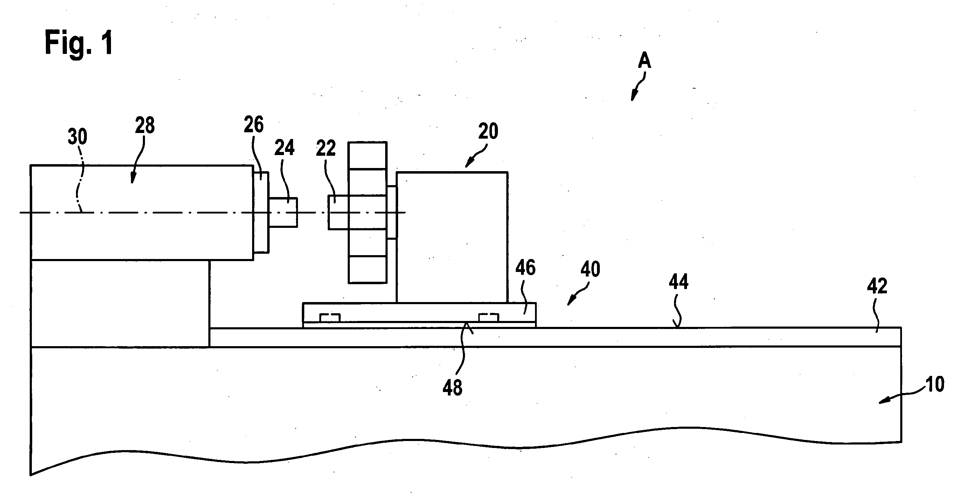

Ein erstes Ausführungsbeispiel einer erfindungsgemäßen Werkzeugmaschine, dargestellt in Fig. 1, umfaßt ein Maschinengestell 10, gegenüber welchem eine als Ganzes mit 20 bezeichnete Bearbeitungseinheit in einer durch zwei quer zueinander verlaufende Bewegungsrichtungen, beispielsweise die Bewegungsrichtungen X und Z, definierten Bewegungsebene bewegbar ist, beispielsweise um mit von der Bearbeitungseinheit 20 getragenen Bearbeitungswerkzeugen 22 ein Werkstück 24 zu bearbeiten. Es ist aber auch denkbar, mit der Bearbeitungseinheit 20 ein Werkstück zu positionieren.

Das Werkstück 24 ist beispielsweise beim ersten Ausführungsbeispiel in einer Werkstückaufnahme 26 einer Werkstückspindel 28 gehalten und mittels der Werkstückspindel 28 um eine Spindelachse 30 drehbar, so daß mit den Bearbeitungswerkzeugen 22 beispielsweise eine Drehbearbeitung durchgeführt werden kann, alternativ oder ergänzend aber auch eine Fräsbearbeitung, für welche das Werkstück 24 um die Spindelachse 30 in definierte Drehpositionen bringbar und in diesen festlegbar ist.

Zur Bewegung der Bearbeitungseinheit 20 ist diese durch eine als Ganzes mit 40 bezeichnete zweidimensionale Führungseinrichtung relativ zum Maschinengestell 10 geführt, wobei diese Führungseinrichtung 40 eine an dem Maschinengestell 10 fixierte Führungsbasis 42 aufweist, die mit einer der Bearbeitungseinheit 20 zugewandten Basisführungsfläche 44 versehen ist.

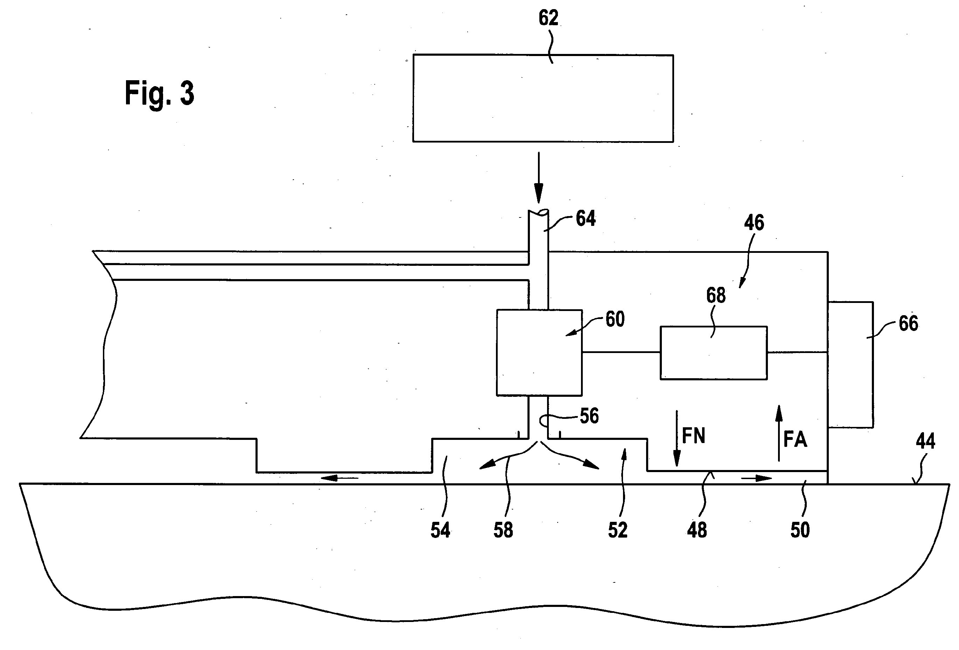

Ferner umfaßt die Führungseinrichtung 40 ein Fußelement 46, auf welchem die Bearbeitungseinheit 20 angeordnet ist und welches eine Fußführungsfläche 48 aufweist, die der Basisführungsfläche 44 zugewandt ist und, wie in Fig. 3 dargestellt, über einen hydrostatischen Gleitfilm 50 auf der Basisführungsfläche 44 abgestützt und in genau definiertem Abstand von dieser geführt ist.

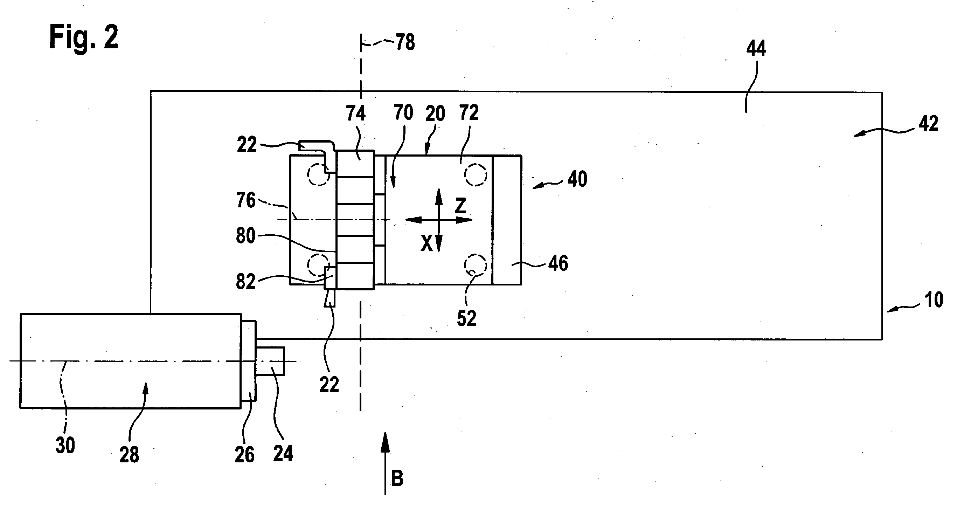

Zum Aufbau des hydrostatischen Gleitfilms 50 ist die Führungseinrichtung 40, wie in Fig. 1 bis 3 dargestellt, mit mehreren Zuführungen 52 versehen, über welche der hydrostatische Gleitfilm 50 mit dem zur Ausbildung desselben erforderlichen Gleitmedium versorgbar ist.

Die Zuführungen 52 sind beispielsweise als gegenüber der Fußführungsfläche 48 zurückgesetzt in dem Fußelement 46 vorgesehene Taschen 54 ausgebildet, welchen über eine Zufuhrleitung 56 das Gleitmedium zugeführt wird, wobei durch die Taschen 54 das in diese einströmende Gleitmedium längs im wesentlichen in allen Richtungen parallel zur Basisführungsfläche 44 verlaufenden Strömungsrichtungen 58 strömt und somit allseitig aus der jeweiligen Zuführung 52 austritt und den hydrostatischen Gleitfilm 50 zwischen der Basisführungsfläche 44 und der Fußführungsfläche 48 aufrecht erhält. Die Menge des über die Zufuhrleitung 56 den Taschen 54 der Zuführungen 52 zugeführten Gleitmediums läßt sich dabei vorzugsweise über ein in der Zufuhrleitung 56 vorgesehenes Steuerventil 60 steuern.

Ferner wird das Gleitmedium der Zufuhrleitung 56 durch eine als Ganzes mit 62 bezeichnete Versorgungseinrichtung zugeführt, wobei die Versorgungseinrichtung 62 im einfachsten Fall eine Pumpeinrichtung darstellt, welche das Gleitmedium mit dem für den Aufbau des hydrostatischen Gleitfilms 50 notwendigen Druck in ein Versorgungsleitungssystem 64 einspeist, von welchem dann die Zufuhrleitung 56 abzweigt.

Ist beispielsweise die Versorgungseinrichtung 62 so ausgebildet, daß sie das Gleitmedium mit einem konstanten Druck im Versorgungsleitungssystem 64 zur Verfügung stellt, so ist eine Einstellung des Steuerventils 60 als Drossel ausreichend, um bei gleichbleibenden Kraftverhältnissen den hydrostatischen Gleitfilm 50 mit im wesentlichen zeitlich konstanter Filmdicke zu erzeugen, da sich in diesem Fall die Filmdicke des hydrostatischen Gleitfilms 50 selbsttätig dadurch regelt, daß ein geringerer Abstand zwischen der Basisführungsfläche 44 und der Fußführungsfläche 48 einen größeren Strömungswiderstand im hydrostatischen Gleitfilm 50 zur Folge hat, so daß der Druck in den Taschen 54 ansteigt und durch diesen Druckanstieg die Basisführungsfläche 44 und die Fußführungsfläche 48 wieder stärker auseinandergedrückt werden und somit sich die ursprüngliche Filmdicke wieder einstellt.

Darüber hinaus führt eine Vergrößerung des Abstands zwischen der Basisführungsfläche 44 und der Fußführungsfläche 48 zu einer Reduzierung des Strömungswiderstands im hydrostatischen Gleitfilm 50, so daß der Druck in den Taschen 54 abfällt und dadurch der hydrostatische Gleitfilm 50 selbsttätig wieder auf die gewünschte Filmdicke zurückgeht.

Der hydrostatische Gleitfilm 50 erzeugt folglich eine auf das Fußelement 46 wirkende Abhebekraft FA, die senkrecht zur Basisführungsfläche 44 gerichtet ist, wobei diese Abhebekraft FA einer senkrecht auf der Basisführungsfläche 44 stehenden Niederhaltekraft FN entgegenwirkt, welche sich aus einer senkrecht zur Basisführungsfläche 44 gerichteten Komponente der Gewichtskraft FG und zusätzlichen gegebenenfalls noch weiteren senkrecht auf der Basisführungsfläche 44 stehenden Komponenten FB von auf die Bearbeitungseinheit 20 bei der Bearbeitung des Werkstücks 24 wirkenden Kräften zusammensetzt.

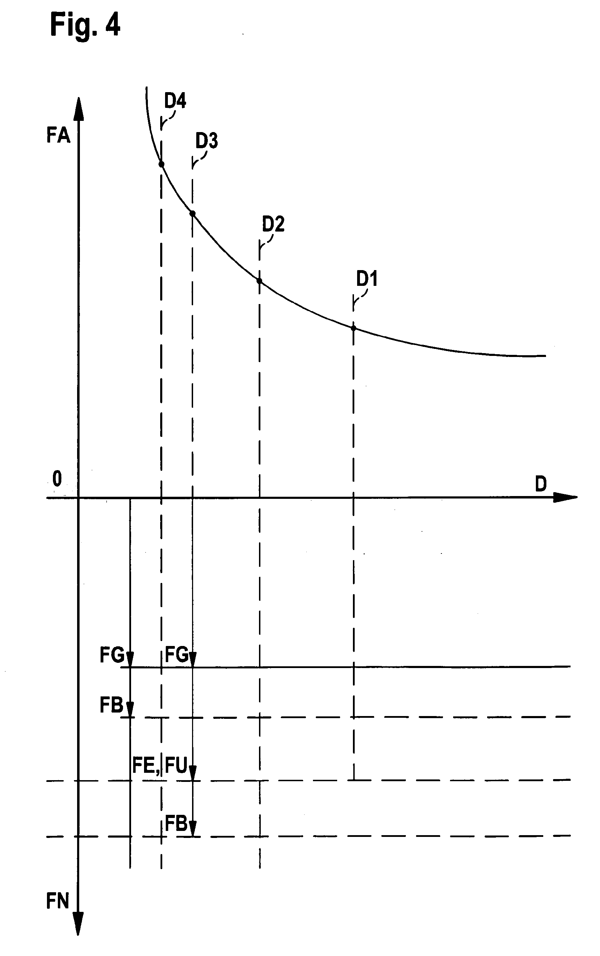

Wirkt im bearbeitungsfreien Zustand nur die Komponente FG der Niederhaltekraft FN, so hat die Abhebekraft FA nur diese zu kompensieren und es stellt sich gemäß Fig. 4 der hydrostatische Gleitfilm 50 mit der Filmdicke D1 ein. Bei einer Bearbeitung des Werkstücks 24 umfaßt die Niederhaltekraft FN noch die Komponente FB und folglich muß die Abhebekraft FA die Summe FG plus FB kompensieren, so daß sich die Filmdicke D auf den Wert D2 einstellt, der beispielsweise ungefähr 70% des Wertes D1 beträgt.

Die Filmdicke D des hydrostatischen Gleitfilms 50 bleibt jedoch in jedem Fall zerstörungsfrei erhalten, so daß dessen Gleiteigenschaften und Dämpfungseigenschaften im wesentlichen ebenfalls erhalten bleiben.

Ergänzend dazu ist es aber auch denkbar, einen Sensor 66 oder mehrere Sensoren 66 an dem Fußelement 46 vorzusehen, welcher den Abstand zwischen sich und der Basisführungsfläche 44 und somit auch den Abstand zwischen der Basisführungsfläche 44 und der Fußführungsfläche 48 ermittelt. Aufgrund des von dem Sensor 66 erfaßten Abstandes von der Basisführungsfläche 44 kann somit über eine Steuerung 68 eine entsprechende Ansteuerung des Steuerventils 60 zur Regelung der Filmdicke des hydrostatischen Gleitfilms 50 erfolgen, so daß unabhängig von den auf das Fußelement 46 wirkenden Niederhaltekräften die Filmdicke des hydrostatischen Gleitfilms 50 auf einen bestimmten Wert festlegbar ist.

Dabei kann die Steuerung 68 mit dem Sensor 66 entweder ständig in Betrieb sein oder zu gewissen Zeitintervallen, zu denen mit einer Variation der Filmdicke des hydrostatischen Gleitfilms 50 gerechnet werden muß, aktiviert werden, um das Steuerventil 60 entsprechend einzustellen.

Durch die erfindungsgemäße Führungseinrichtung 40 besteht grundsätzlich die Möglichkeit, die Ausdehnung der Basisführungsfläche 44, um ein Vielfaches größer als die Ausdehnung der Fußführungsfläche 48 zu wählen, wobei die Basisführungsfläche 44 als zusammenhängende unterbrechungsfrei und ausnehmungsfrei gestaltete Fläche ausgebildet, so daß sich an jeder Stelle der Basisführungsfläche 44 der hydrostatische Gleitfilm 50 zwischen dieser und der Fußführungsfläche 48 ausbilden kann.

Vorzugsweise beträgt die Ausdehnung der Basisführungsfläche 44 mindestens das 1,5-fache der maximalen Ausdehnung der Fußführungsfläche 48 in den Bewegungsrichtungen X, Z.

Bei dem dargestellten ersten Ausführungsbeispiel der erfindungsgemäßen Werkzeugmaschine ist die Bearbeitungseinheit 20 beispielsweise als Werkzeugrevolver 70 ausgebildet, dessen Revolvergehäuse 72 auf dem Fußelement 46 angeordnet ist und welcher einen Revolverkopf 74 aufweist, der relativ zum Revolvergehäuse um eine Revolverachse 76 drehbar ist.

Bei dem dargestellten, ersten Ausführungsbeispiel verläuft die Revolverachse 76 vorzugsweise ungefähr parallel zur Basisführungsfläche 44, so daß der Revolverkopf 74 sich radial zur Revolverachse 76 in einer Ebene 78 erstreckt, die in diesem Fall dann senkrecht zur Basisführungsfläche 44 verläuft.

Beispielsweise ist die Revolverachse 76 ferner so ausgerichtet, daß sie ungefähr parallel zur Spindelachse 30 verläuft, die Revolverachse 76 kann jedoch auch beliebige Winkel mit der Spindelachse 30 einschließen oder sogar senkrecht zur Spindelachse 30 verlaufen.

Prinzipiell wäre es möglich, den Revolverkopf 74 als Sternrevolver auszubilden, vorteilhafter ist jedoch, aufgrund der geringeren Bauhöhe, die Ausbildung des Revolverkopfes 74 als Scheibenrevolver, welcher somit auf einer dem Revolvergehäuse 72 abgewandten Stirnseite 80 mit Werkzeughaltern 82 zur Aufnahme der Werkzeuge 22 bestückbar ist. Damit läßt sich die radiale Erstreckung der Werkzeuge 22 bezogen auf die Revolverachse 76 geringer halten als bei einem Sternrevolver und somit insgesamt die Lage der Revolverachse 76 relativ zur Basisführungsfläche 44 niedriger halten als im Fall eines Sternrevolvers.

Das Verschieben der Bearbeitungseinheit 20 mit dem Fußelement 46 relativ zur Führungsbasis 42 kann auf unterschiedlichste Art und Weise erfolgen. Hierzu ist grundsätzlich jede Art eines Verschiebeantriebs geeignet, welcher in der Lage ist, auf einer der Bearbeitungseinheit 20 zugewandten Seite der Basisführungsfläche 44, das heißt also oberhalb der Führungsbasis 42 an der Bearbeitungseinheit 20 oder dem Fußelement 46 anzugreifen.

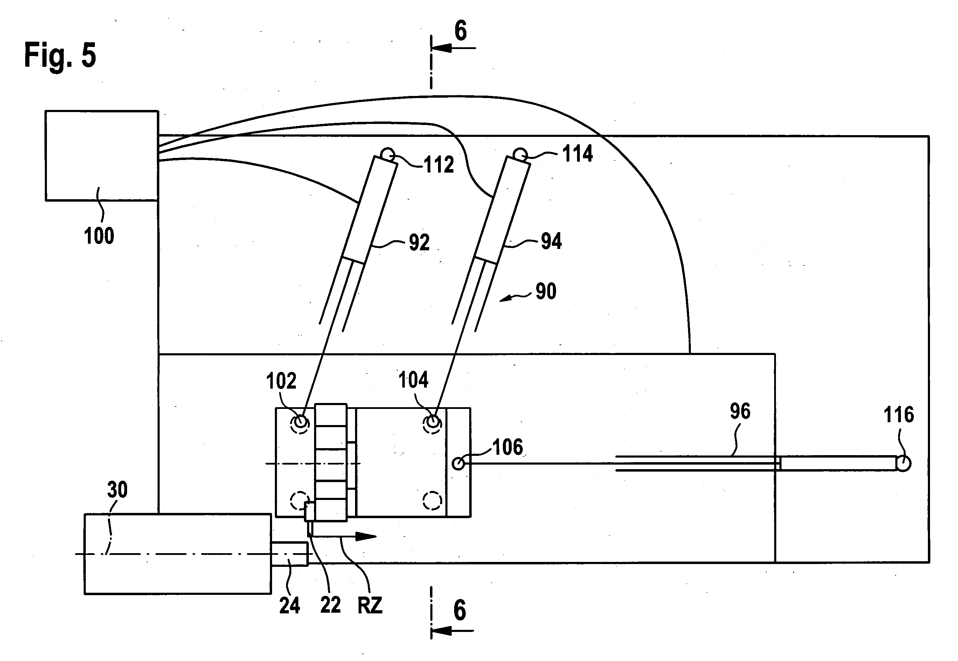

Besonders zweckmäßig ist die im Zusammenhang mit dem ersten Ausführungsbeispiel in Fig. 5 dargestellte Antriebseinrichtung 90, welche drei Antriebsstreben 92, 94, 96 umfaßt, die sich in einer zur Basisführungsfläche 44 ungefähr parallelen Ebene 98 erstrecken und durch eine Positionssteuerung 100 zur Positionierung der Bearbeitungseinheit 20 auf der Führungsbasis 42 ansteuerbar sind. Die Antriebsstreben 92, 94, 96 greifen einerseits beispielsweise an dem Fußelement 46 über Gelenke 102, 104, 106 an und sind andererseits an dem Maschinengestell 10, wie in Fig. 5 dargestellt, mittels Gelenken 112, 114, 116 gelagert.

Verläuft die Ebene 98 exakt parallel zur Basisführungsfläche 44, so können die Gelenke 102, 104, 106 sowie 112, 114, 116 ausschließlich um senkrecht zur Ebene 98 verlaufende Drehachsen 108, 118 drehbar sein, verläuft die Ebene 98 geneigt zur Basisführungsfläche 44 so ist es erforderlich, daß die Gelenke 102, 104, 106 sowie 112, 114, 116 auch noch zusätzlich um senkrecht zu den Drehachsen 108, 118 sowie senkrecht zu der Erstreckung der Antriebsstreben 92, 94, 96 verlaufende Achsen drehbar sind.

Die Antriebsstreben 92, 94, 96 sind vorzugsweise derart in der Ebene 98 so angeordnet, daß beispielsweise die Antriebsstreben 92 und 94 gemeinsam ein Parallelogramm bilden, so daß in einfacher Weise sichergestellt werden kann, daß in allen Positionen die Ausrichtung der Werkzeuge 22 parallel zu den übrigen Positionen ist.

Da ferner die Antriebsstreben 92, 94, 96 über die Gelenke 112, 114, 116 fest am Maschinengestell 10 angelenkt sind, sind alle Antriebsstreben 92, 94, 96 durch die Positionssteuerung 100 längenvariabel steuerbar auszubilden, so daß der Abstand zwischen den Gelenken 102, 112, 104, 114 und 106, 116 gesteuert variierbar ist.

Hierzu sind die unterschiedlichsten Verstellmöglichkeiten bekannt. Eine bekannte Art der Verstellung ist in der WO 01/81040 beschrieben.

Bei der Längenverstellung durch die Positionssteuerung 100 ist jedoch zu beachten, daß die Längenverstellung der Antriebsstreben 92, 94 synchron zu erfolgen hat, um sicherzustellen, daß diese stets als Schenkel eines Parallelogramms die Ausrichtung der Bearbeitungseinheit 20 in allen Positionen auf der Führungsbasis 42 als untereinander parallele Ausrichtungen festlegen.

Ferner ist vorzugsweise die Antriebseinrichtung 90 so ausgebildet, daß sich zumindest eine der Antriebsstreben 92, 94, 96, noch besser die beiden als Parallelogramm zusammenwirkenden Antriebsstreben 92, 94 auf einer dem in Arbeitsstellung stehenden Werkzeug 22a abgewandten Seite der Bearbeitungseinheit 20 erstrecken, so daß eine günstige Abstützung der Bearbeitungseinheit 20 gegen die bei der Bearbeitung des Werkstücks 24 auftretenden Reaktionskräfte RX in X-Bewegungsrichtung und RZ in Z-Bewegungsrichtung möglich ist.

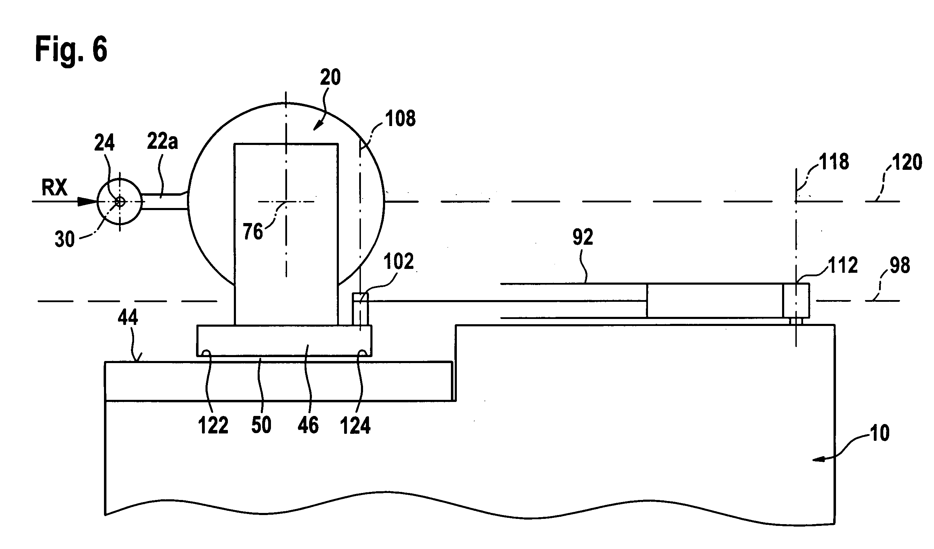

Wie in Fig. 5 und 6 erkennbar, wirken die Reaktionskräfte RX und RZ in einer die Spindelachse 30 schneidenden Bearbeitungsebene 120, so daß dann, wenn die Ebene 98, in welcher sich die Antriebsstreben 92, 94, 96 erstrecken, tiefer als die Bearbeitungsebene 120 liegt, die Reaktionskräfte RX und RZ ein auf das Fußelement 46 wirkendes Kippmoment bewirken, welches somit zu unterschiedlichen Kräften auf den hydrostatischen Gleitfilm 50 führt, das heißt beispielsweise den hydrostatischen Gleitfilm 50 in einem dem in Arbeitsstellung stehenden Werkzeug 22a zugewandten Randbereich 122 des Fußelements 46 geringer belasten als in einem diesem gegenüberliegenden Randbereich 124, der folglich dem in Arbeitsstellung stehenden Werkzeug 22a abgewandt ist.

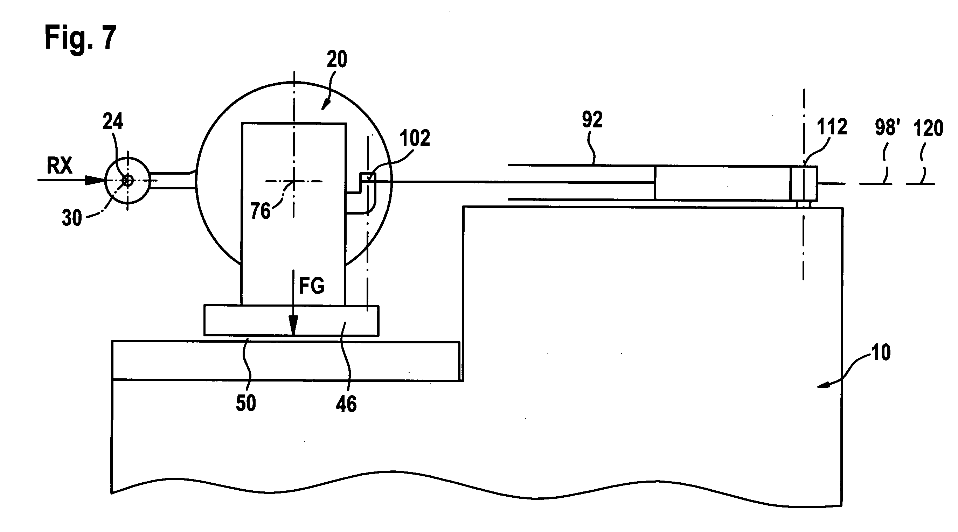

Zur Vermeidung eines derartigen Kippmoments ist bei einem zweiten, in Fig. 7 dargestellten Ausführungsbeispiel vorgesehen, die Ebene 98', in welcher sich die Antriebsstreben 92, 94, 96 erstrecken, bis nahe an die Bearbeitungsebene 120 heranzulegen, vorzugsweise so zu legen, daß diese mit der Bearbeitungsebene 120 zusammenfällt, so daß die Reaktionskräfte RX und RZ unmittelbar von der Antriebseinrichtung 90 aufgenommen werden können und zu keinerlei Kippmoment auf das Fußelement 46 und somit zu keinerlei ungleichmäßiger Belastung des hydrostatischen Gleitfilms 50 führen.

Somit ist bei dem zweiten, in Fig. 7 dargestellten Ausführungsbeispiel der hydrostatische Gleitfilm 50 im wesentlichen über das Fußelement 46 im wesentlichen durch eine zur Niederhaltekraft FN beitragende Kraft FG beaufschlagt, welche im wesentlichen der senkrecht zur Basisführungsfläche 44 wirkenden Komponente der Gewichtskraft der Bearbeitungseinheit 20 mitsamt dem Fußelement 46 entspricht, wobei die Kraft FG unabhängig von den Reaktionskräften RX und RZ ist. Zur Niederhaltekraft FN tragen nur noch geringe Komponenten FB bei, die aus einer senkrecht zur Basisführungsfläche 44 stehenden Komponente einer Schnittkraft des Werkzeugs 22A resultieren.

Im übrigen ist das zweite Ausführungsbeispiel gemäß Fig. 7 in gleicher Weise ausgebildet wie das erste Ausführungsbeispiel, so daß die identischen Elemente mit den identischen Bezugszeichen versehen sind und bezüglich der Beschreibung der übrigen Merkmale des zweiten Ausführungsbeispiels gemäß Fig. 7 vollinhaltlich auf die Ausführungen zum ersten Ausführungsbeispiel Bezug genommen werden kann.

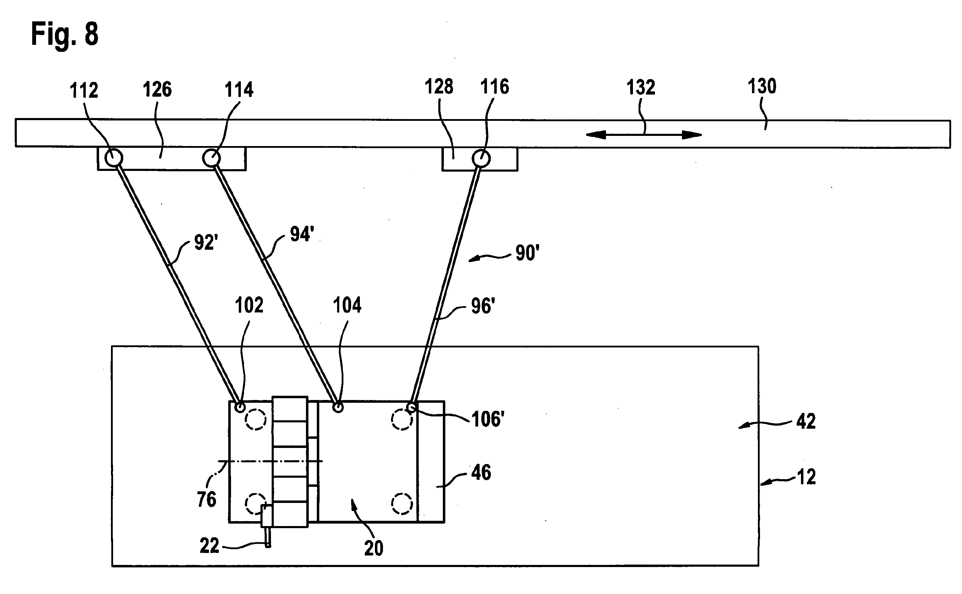

Bei einem dritten Ausführungsbeispiel, dargestellt in Fig. 8, umfaßt die Antriebseinrichtung 90' ebenfalls Antriebsstreben 92', 94' und 96', die allerdings bei dieser Antriebseinrichtung 90' längeninvariant sind.

Die Streben 92', 94' und 96' erstrecken sich dabei in gleicher Weise wie bei der Antriebseinrichtung 90 zwischen den Gelenken 102, 104 und 106, angeordnet an der Bearbeitungseinheit 20 oder dem Fußelement 46 und den Gelenken 112, 114 und 116, wobei aufgrund der Längeninvarianz der Antriebsstreben 92', 94' und 96' die Gelenke 112 und 114 an einem Schlitten 126 gehalten sind und das Gelenk 116 ebenfalls an einem Schlitten 128 gelagert ist, die beide an einer Längsführung 130 unabhängig voneinander verschiebbar sind.

Die Antriebsstreben 92', 94' haben dabei eine derartige Länge und der Abstand der Gelenke 102 und 104 sowie 112 und 114 ist ebenfalls identisch, so daß die Antriebsstreben 92' und 94' ebenfalls eine Parallelogrammführung bilden.

Durch Verschieben der Schlitten 126 und 128 gesteuert durch die Positionssteuerung 100 in einer Längsrichtung 132 der Längsführung 130 läßt sich somit die Bearbeitungseinheit 20 in gleicher Weise wie beim ersten Ausführungsbeispiel in zueinander parallel ausgerichtete Positionen auf der Führungsbasis 42 verschieben, so daß in den unterschiedlichen Positionen der Bearbeitungseinheit 20 die Bearbeitungswerkzeuge 22 eine Ausrichtung parallel zueinander beibehalten.

Durch präzise Verschiebung der beiden Schlitten 126 und 128, gesteuert durch die Positionssteuerung 100, ist somit die Bearbeitungseinheit 20 in beliebigen Positionen auf der Führungsbasis 42 positionierbar.

Bei den bislang beschriebenen Ausführungsbeispielen verläuft die Revolverachse 76 des Werkzeugrevolvers 70 parallel oder ungefähr parallel zur Basisführungsfläche 44, so daß sich der Revolverkopf 74 radial zur Revolverachse 76 stets in einer Richtung quer zur Basisführungsfläche 44 ausdehnt.

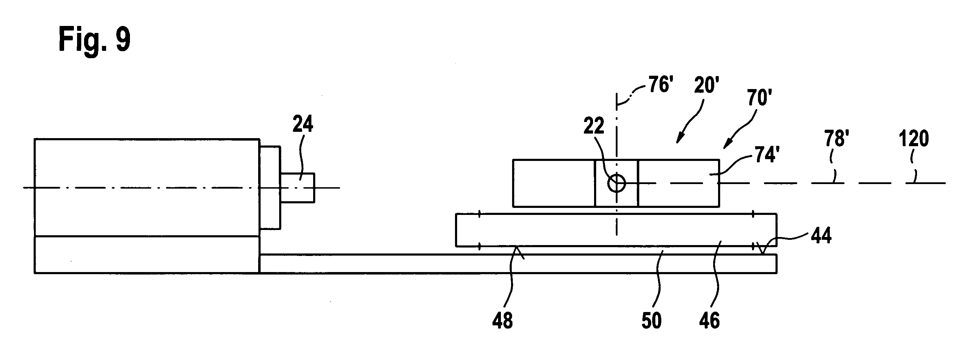

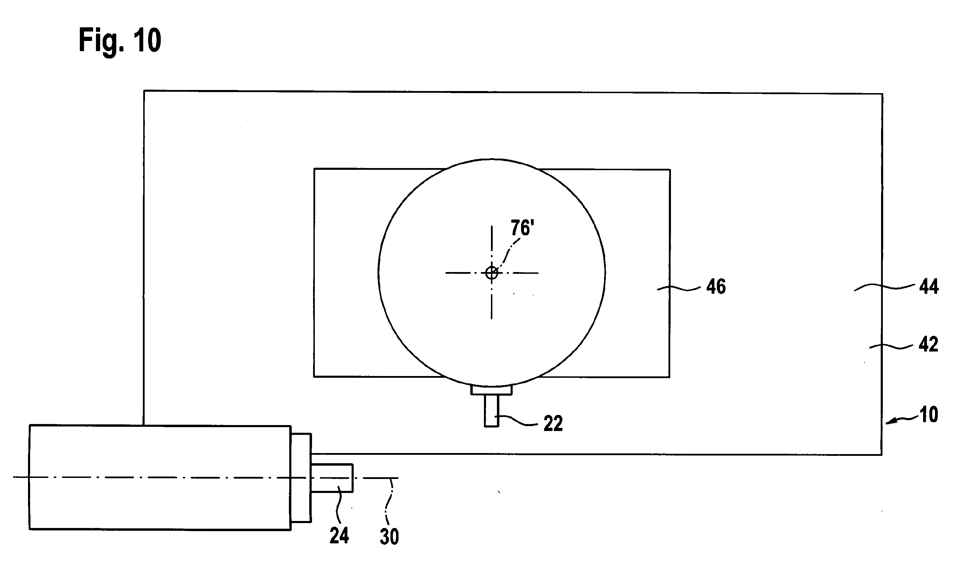

Bei einem vierten Ausführungsbeispiel, dargestellt in Fig. 9 und 10 ist der Werkzeugrevolver 70' jedoch so ausgebildet, daß der Revolverkopf 74' sich in der Ebene 78' ausdehnt, die parallel zur Basisführungsfläche 44 verläuft, wobei in diesem Fall die Revolverachse 76' senkrecht oder mit geringer Neigung gegenüber einer Senkrechten zur Basisführungsfläche 44 ausgerichtet ist.

Damit läßt sich die Bauhöhe der Bearbeitungseinheit 20' und insbesondere der Abstand der Bearbeitungsebene 120 von der Basisführungsfläche 44 nennenswert reduzieren, so daß das aufgrund der Reaktionskräfte RX und RZ auftretende und auf die Bearbeitungseinheit 20' wirkende Kippmoment bei der Bearbeitung des Werkstücks 24 ebenfalls reduziert werden kann, wodurch der hydrostatische Gleitfilm 50 zwischen der Fußführungsfläche 48 und der Basisführungsfläche 44 geringeren Kräfteschwankungen ausgesetzt ist, selbst wenn die jeweilige Antriebseinrichtung 90 oder 90', dargestellt im Zusammenhang mit dem ersten oder dritten Ausführungsbeispiel an dem Fußelement 46 angreift.

Im übrigen ist das vierte Ausführungsbeispiel entweder identisch wie das erste oder das dritte Ausführungsbeispiel aufgebaut, insbesondere im Hinblick auf die Führungseinrichtung 40, so daß bezüglich der nicht explizit im Zusammenhang mit dem vierten Ausführungsbeispiel beschriebenen Elemente vollinhaltlich auf diese Ausführungsbeispiele Bezug genommen wird.

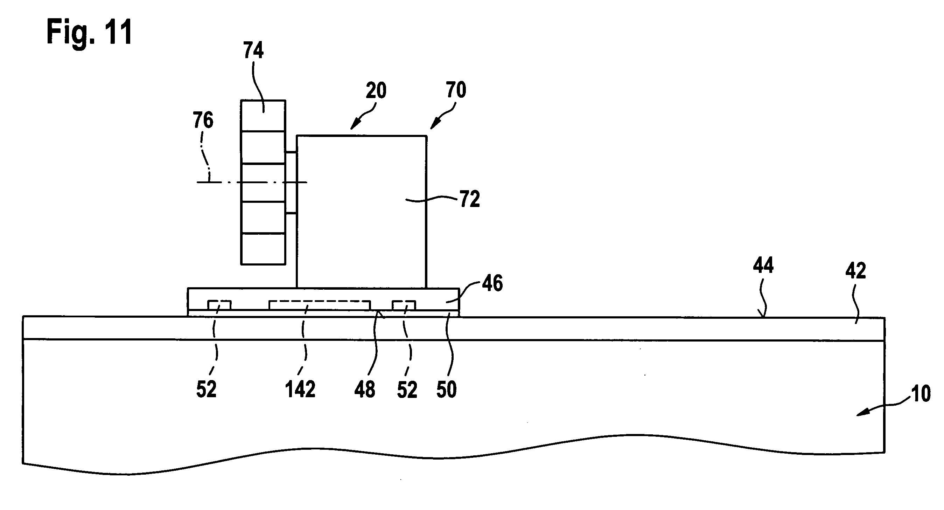

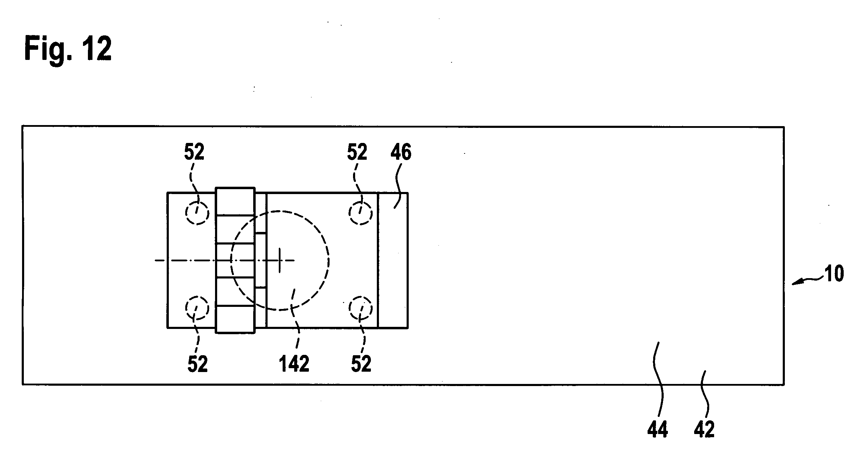

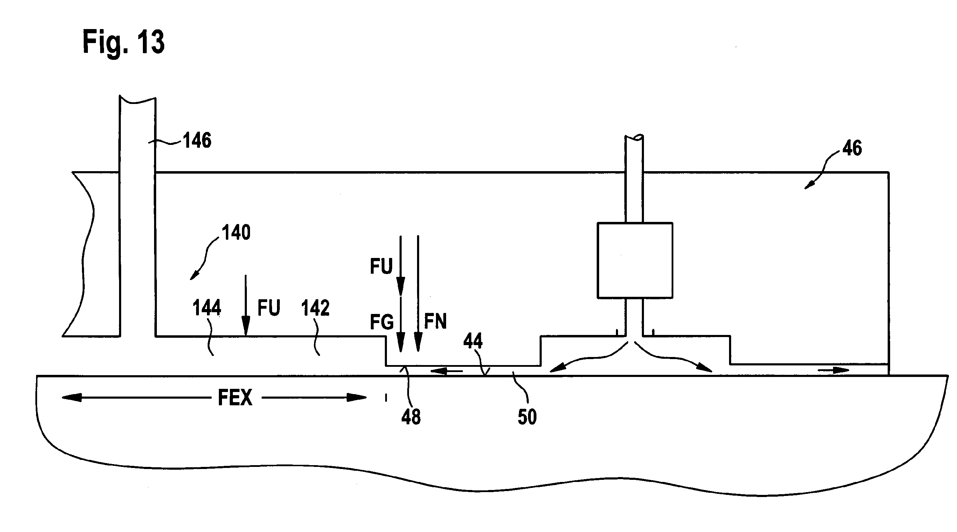

Bei einem fünften Ausführungsbeispiel einer erfindungsgemäßen Werkzeugmaschine, dargestellt in den Fig. 11, 12 und 13 sind diejenigen Merkmale, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen werden kann.

Im Gegensatz zum ersten Ausführungsbeispiel ist zusätzlich eine als Ganzes mit 140 bezeichnete Halteeinrichtung vorgesehen, welche dazu dient, die Niederhaltekraft FN zumindest dann, wenn dies erforderlich sein sollte, zu vergrößern.

Die Halteeinrichtung 140 arbeitet dabei berührungslos und erzeugt in einem Teilbereich zwischen der Basisführungsfläche 44 und der Fußführungsfläche 48 ein Unterdruckpolster 142, mit einer definierten Flächenausdehnung FEX in Richtung der Basisführungsfläche 44 und der Fußführungsfläche 48, so daß eine dem Unterdruck in dem Unterdruckpolster 142 entsprechende Haltekraft FU erzeugbar ist, die sich zu der senkrecht auf der Basisführungsfläche 44 stehenden Komponente der Gewichtskraft FG addiert und folglich die Niederhaltekraft FN zumindest die Summe der Kraft FU und der Kraft FG darstellt, wobei gegebenenfalls noch zusätzliche, bei der Bearbeitung auf das Fußelement 46 wirkende Komponenten FB zu der Niederhaltekraft FN beitragen.

Das Unterdruckpolster 142 mit einer definierten Flächenausdehnung FEX läßt sich im einfachsten Fall dadurch erzeugen, daß das Fußelement 46 mit einer sich ausgehend von der Fußführungsfläche 48 in das Fußelement 46 hinein erstreckenden Ausnehmung 144 versehen ist, in welche eine Unterdruckleitung 146 mündet, wobei über die Unterdruckleitung 146 in der Ausnehmung 144 der das Unterdruckpolster 142 erzeugende Unterdruck herstellbar ist.

Da die Ausnehmung 144 rings umlaufend durch den Gleitfilm 50 umschlossen und somit abgedichtet ist, entspricht die Flächenausdehnung FEX des Unterdruckpolsters 142 im wesentlichen der Ausdehnung der Ausnehmung 144 in Richtung parallel zur Basisführungsfläche 44.

Vorzugsweise ist dabei das Unterdruckpolster 142 derart angeordnet, daß es von Zuführungen 52 für Gleitmedium umgeben ist, und somit allseits um das Unterdruckpolster 142 herum der Gleitfilm 50 für eine Abdichtung sorgt.

Darüber hinaus kann über die Ausnehmung 144 und die Unterdruckleitung 146 auch noch in das Unterdruckpolster 142 einströmendes Gleitmedium abgesaugt und zur Wiederverwendung der Versorgungseinrichtung 62 zugeführt werden.

Eine derartige erfindungsgemäße Halteeinrichtung 140 bietet somit, wie ebenfalls in Fig. 4 dargestellt, die Möglichkeit, die Niederhaltekraft FN zu vergrößern, so daß die Abhebekraft FA, die dieser entgegenwirkt ebenfalls größer werden muß. Dies hat zur Folge, daß sich die Filmdicke D auf den Wert D3 einstellt und sich somit die bei der Bearbeitung des Werkstücks 24 mit dem Werkzeug 22 auftretenden Komponenten FB geringer auf die Filmdicke D des Gleitfilms 50 auswirken, da der Unterschied der sich bei der Bearbeitung einstellenden Filmdicke D4 gegenüber der Filmdicke D3 nur ungefähr 20% beträgt. Daraus folgt, daß sich mit der Halteeinrichtung 140 das Verhalten des hydrostatischen Gleitfilms 50, insbesondere auch die "Steifigkeit" desselben gegenüber Variationen der Filmdicke D einstellen läßt.

Damit besteht vorteilhafterweise auch die Möglichkeit, die Maßnahmen zur Stabilisierung der Filmdicke des hydrostatischen Gleitfilms 50 weniger aufwendig zu gestalten.

Darüber hinaus bietet die erfindungsgemäße Halteeinrichtung auch noch die Möglichkeit, das Fußelement 46 auf der Führungsbasis 42 festzusetzen, in dem die Versorgung der Zuführungen 52 mit Gleitmedium unterbrochen wird, so daß der hydrostatische Gleitfilm 50 zusammenbricht und folglich das Fußelement 46 unmittelbar ohne den Gleitfilm 50 auf der Führungsbasis 42 aufsetzt und somit aufgrund der Reibung zwischen beiden unter Einwirkung der Kraft FU die Bearbeitungseinheit 20 stationär festlegbar ist.

Eine derartige stationäre Festlegung des Fußelements wäre beispielsweise bei Bearbeitungspausen denkbar oder auch für Bearbeitungen mit geringerer Genauigkeit, jedoch großen, auf das in Arbeitsstellung stehende Werkzeug 22 wirkenden Kräften, die sich durch die Fixierung des Fußelements 46 auf der Führungsbasis 42 noch besser abfangen lassen.

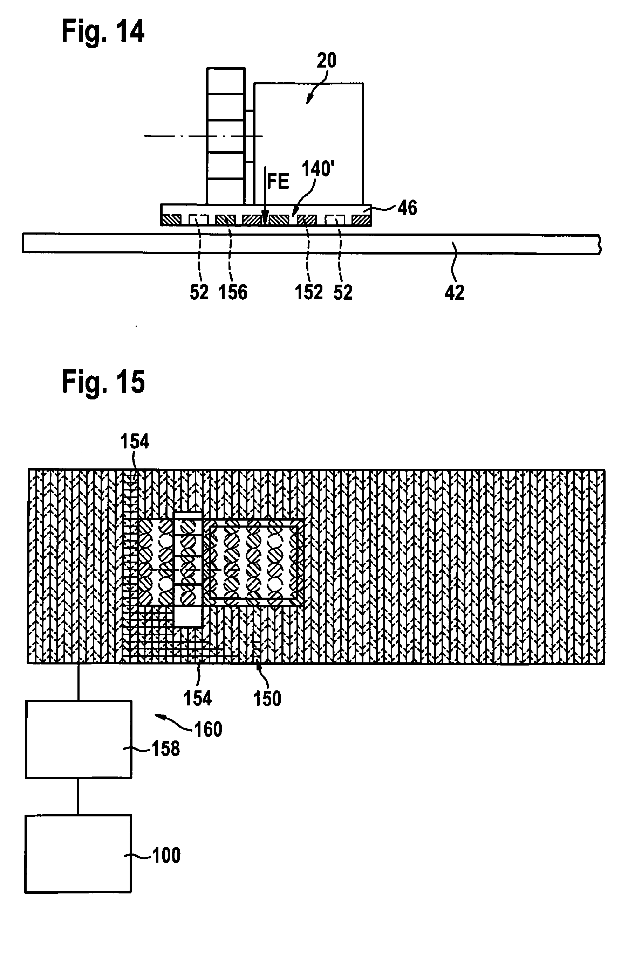

Bei einem sechsten Ausführungsbeispiel, dargestellt in Fig. 14 und 15 sind ebenfalls diejenigen Elemente, die mit denen des ersten Ausführungsbeispiels identisch sind, mit denselben Bezugszeichen versehen, so daß hinsichtlich der Beschreibung und Ausbildung derselben vollinhaltlich auf die Ausführungen zum ersten Ausführungsbeispiel Bezug genommen wird.

Im Gegensatz zum fünften Ausführungsbeispiel arbeitet die Halteeinrichtung 140' beim fünften Ausführungsbeispiel nicht mit einem Unterdruckpolster 142 sondern dadurch berührungslos, daß die Halteeinrichtung 140' eine elektromagnetische Anziehungskraft FE erzeugt, welche einen Beitrag zur Niederhaltekraft FN leistet und somit das Fußelement 46 in Richtung der Führungsbasis 42 beaufschlagt. Somit lassen sich im Hinblick auf die Einstellung der Eigenschaften des hydrostatischen Gleitfilms 50 dieselben Effekte erreichen wie mit dem die Kraft FU erzeugenden Unterdruckpolster 142.

Das Primärelement 150 umfaßt seinerseits Polelemente 154, die nicht dargestellte Wicklungen und Polschuhe aufweisen und durch Bestromen der Wicklungen magnetisierbar sind.

Hierzu ist vorzugsweise, wie in Fig. 14 dargestellt, in der Führungsbasis 42 mindestens ein Primärelement 150, vorzugsweise mindestens ein elektrisch magnetisierbares Primärelement 150 vorgesehen, welches mit mindestens einem in dem Fußelement 46 vorgesehenen Sekundärelementen 152 zusammenwirkt.

Das Sekundärelement 152 umfaßt seinerseits magnetisierbare Polelemente 156, die Permanentmagnete oder auch magnetisierbare Kurzschlußwicklungen entsprechend Sekundärteilen von Linearmotoren sein können.

Durch die elektromagnetische Wechselwirkung zwischen dem Primärelement 150 und dem Sekundärelement 152 wird die elektromagnetische Kraft FE erzeugt, die sich in gleicher Weise wie die Kraft FU zu der Kraft FG addiert und zur Niederhaltekraft FN beiträgt und die gleichen Wirkungen entfaltet, wie im Zusammenhang mit dem fünften Ausführungsbeispiel erläutert.

Prinzipiell besteht die Möglichkeit, die Polelemente 154 des Primärelements 150 über die ganze Basisführungsfläche 44 verteilt ständig zu beschreiben, dadurch würden jedoch in vielen Fällen unerwünschte magnetische Felder entstehen.

Aus diesem Grund ist vorzugsweise eine Steuerung 158 vorgesehen, welche entsprechend der Position des Fußelements 46 nur diejenigen Polelemente 154 des Primärelements 150 ansteuert, über denen das Fußelement 46 mit seinem Sekundärelement 152 steht.

Die Steuerung 158 arbeitet dabei auf der Basis von Informationen der Positionssteuerung 100 für die Positionierung der Bearbeitungseinheit 20 relativ zum Maschinengestell 10.

In diesem Fall sind die Polelemente 154 des Primärelements 150 schachbrettmusterähnlich angeordnet, so daß jedes Polelement 154 jeweils in einem begrenzten Teilflächenbereich der Basisführungsfläche 44 ein Magnetfeld erzeugt.

Da beim sechsten Ausführungsbeispiel ohnehin mindestens ein Primärelement 150 und mindestens ein Sekundärelement 152 vorhanden sind, die auch einen Betrieb als Linearmotor erlauben, besteht beim sechsten Ausführungsbeispiel auch die Möglichkeit, das Primärelement 150 und das Sekundärelement 152 nicht nur zum Erzeugen der Kraft FE heranzuziehen sondern gleichzeitig auch als Antriebseinrichtung 160 einzusetzen, wobei in diesem Fall die Positionssteuerung 100 mit der Steuerung 158 für die Auswahl der Polelemente 154 zusammenwirkt, um die Polelemente 154 entsprechend einem zweidimensionalen Linearmotor anzusteuern, so daß die eine mechanische Antriebseinrichtung 90, wie im Zusammenhang mit dem ersten, zweiten und dritten Ausführungsbeispiel beschrieben, zur Bewegung der Bearbeitungseinheit 20 nicht erforderlich ist.

Damit erfolgt bei dem sechsten Ausführungsbeispiel durch die Antriebseinrichtung 160 unmittelbar eine Kraftwirkung auf das Fußelement 46 um dieses relativ zur Führungsbasis 42 zu verschieben.

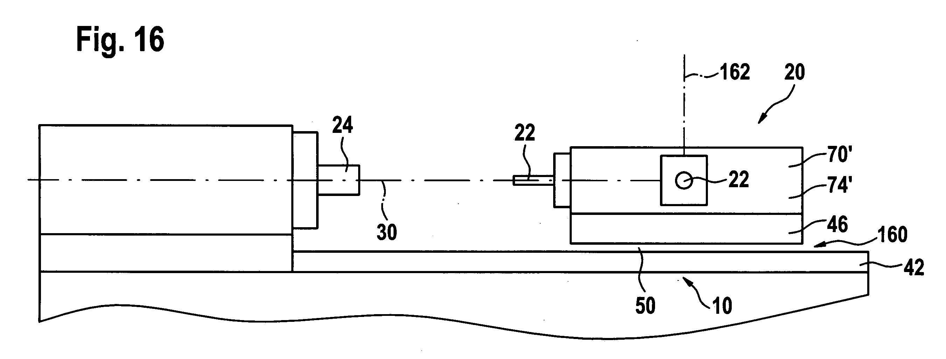

Bei einem siebten Ausführungsbeispiel, dargestellt in Fig. 16, sind diejenigen Elemente, die mit den voranstehenden Ausführungsbeispielen identisch sind, mit denselben Bezugszeichen versehen, so daß hinsichtlich der Beschreibung auf die Ausführungen zu diesen Elementen verwiesen werden kann.

Bei dem siebten Ausführungsbeispiel ist der Werkzeugrevolver 70' nur durch den Revolverkopf 74' repräsentiert, welcher unmittelbar auf dem Fußelement 46 sitzt und fest mit dem Fußelement 46 verbunden ist.

Ferner ist das Fußelement 46 in gleicher Weise wie beim sechsten Ausführungsbeispiel durch die Antriebseinrichtung 160 relativ zur Führungsbasis 42 bewegbar, wobei die Antriebseinrichtung 160 nicht nur dazu ausgenützt wird, das Führungselement 46 in Richtung der Bewegungsrichtungen X und Z linear zu bewegen, sondern bei geeigneter Ansteuerung der Polelemente 154 des Primärelements 150 dazu eingesetzt werden kann, das Führungselement 46 um eine senkrecht zur Basisführungsfläche 44 stehende Achse 162 zu drehen, welche in diesem Fall die Drehachse für den fest mit dem Fußelement 46 verbundenen Revolverkopf 74' darstellt, so daß die Antriebseinrichtung 160 auch gleichzeitig in der Lage ist, den Revolverkopf 74' um die Achse 162 zu drehen und somit unterschiedliche Werkzeuge 22 in die Arbeitsposition zu bringen, in gleicher Weise wie dies bei einer Drehung des Revolverkopfes 74 konventionell um die Revolverachse 76 erfolgt, wie beispielsweise im Zusammenhang mit dem ersten Ausführungsbeispiel beschrieben.

In diesem Fall ist allerdings die Achse 162, um welche sich der Revolverkopf 74 dreht, senkrecht zur Basisführungsfläche 44 ausgerichtet, wie im Zusammenhang mit dem vierten Ausführungsbeispiel beschrieben.

## Patentansprüche

1. Werkzeugmaschine umfassend ein Maschinengestell (10), eine gegenüber dem Maschinengestell (10) mindestens in einer zweidimensionalen Bewegungsebene (X/Z) bewegbare Bearbeitungseinheit (20) und eine Führungsrichtung (20) zur Führung der Bearbeitungseinheit (20) in der zweidimensionalen Bewegungsebene (X/Z) mit einer eine Basisführungsfläche (44) aufweisenden Führungsbasis (42) und mit einem die Bearbeitungseinheit (20) tragenden Fußelement (46), welches eine der Basisführungsfläche (44) zugewandte Fußführungsfläche (48) aufweist,
**dadurch gekennzeichnet, daß** zwischen der Fußführungsfläche (48) und der Basisführungsfläche (44) ein hydrostatischer Gleitfilm (50) vorgesehen ist, auf welchem das Fußelement (46) mit seiner Fußführungsfläche (48) relativ zur Führungsbasis gleitet.

2. Werkzeugmaschine nach Anspruch 1, **dadurch gekennzeichnet, daß** die Basisführungsfläche (44) in jeder der beiden die Bewegungsebene (X/Z) aufspannenden Bewegungsrichtungen (X/Z) eine Ausdehnung aufweist, die größer ist als die maximale Ausdehnung der Fußführungsfläche (48) in dieser Richtung.

3. Werkzeugmaschine nach Anspruch 2, **dadurch gekennzeichnet, daß** die Ausdehnung der Basisführungsfläche (44) mindestens das 1,5-fache der maximalen Ausdehnung der Fußführungsfläche (48) in der jeweiligen Richtung beträgt.

4. Werkzeugmaschine nach einem der voranstehenden Ansprüche, **dadurch gekennzeichnet, daß** die Basisführungsfläche (44) eine zusammenhängende Fläche ist.

5. Werkzeugmaschine nach einem der voranstehenden Ansprüche, **dadurch gekennzeichnet, daß** die Basisführungsfläche (44) durchbruchsfrei ausgebildet ist.

6. Werkzeugmaschine nach einem der voranstehenden Ansprüche, **dadurch gekennzeichnet, daß** die Basisführungsfläche (44) ausnehmungsfrei zusammenhängend ausgebildet ist.

7. Werkzeugmaschine nach einem der voranstehenden Ansprüche, **dadurch gekennzeichnet, daß** das Fußelement (46) mit mindestens einer Zuführung (52) für ein den hydrostatischen Gleitfilm (50) bildendes Gleitmedium versehen ist.

8. Werkzeugmaschine nach Anspruch 7, **dadurch gekennzeichnet, daß** das Fußelement (46) mit mehreren Zuführungen (52) für das Gleitmedium versehen ist.

9. Werkzeugmaschine nach Anspruch 8, **dadurch gekennzeichnet, daß** das Fußelement (46) mit mindestens drei Zuführungen (52) für das Gleitmedium versehen ist.

10. Werkzeugmaschine nach einem der Ansprüche 8 oder 9, **dadurch gekennzeichnet, daß** die Zuführungen (52) für das Gleitmedium in einem außenliegenden Bereich der Fußführungsfläche (48) angeordnet sind.

11. Werkzeugmaschine nach einem der Ansprüche 7 bis 10, **dadurch gekennzeichnet, daß** der mindestens einen Zuführung (52) für Gleitmedium eine Einstelleinrichtung (60) für eine Einstellung einer Zuflußmenge des Gleitmediums zugeordnet ist.

12. Werkzeugmaschine nach einem der voranstehenden Ansprüche, **dadurch gekennzeichnet, daß** der vom Gleitmedium erzeugte hydrostatische Gleitfilm (50) eine einem unmittelbaren Aufliegen der Fußführungsfläche (48) auf der Basisführungsfläche (44) entgegenwirkende Abhebekraft (FA) erzeugt.

13. Werkzeugmaschine nach Anspruch 12, **dadurch gekennzeichnet, daß** die Abhebekraft (FA) eine auf das Fußelement (46) wirkende Niederhaltekraft (FN) kompensiert, welche zumindest eine senkrecht auf der Basisführungsfläche (44) stehende Komponente der Gewichtskraft (FG) der Bearbeitungseinheit (20) umfaßt.

14. Werkzeugmaschine nach Anspruch 12 oder 13, **dadurch gekennzeichnet, daß** der hydrostatische Gleitfilm (50) sich derart verhält, daß die Abhebekraft (FA) durch zerstörungsfreie Kompression des hydrostatischen Gleitfilms (50) so weit vergrößerbar ist, daß mit der Abhebekraft (FA) sämtliche bei einer Bearbeitung eines Werkstücks (24) auftretenden Niederhaltekräfte (FN) kompensierbar sind.

15. Werkzeugmaschine nach Anspruch 14, **dadurch gekennzeichnet, daß** der hydrostatische Gleitfilm (50) im bearbeitungsfreien Zustand durch eine derart große Niederhaltekraft (FN) beaufschlagt ist, daß der Anstieg der Niederhaltekraft (FN) bei Bearbeitung des Werkstücks (24) zu einer Verringerung der Dicke des hydrostatischen Gleitfilms (50) um ungefähr 50% oder weniger führt.

16. Werkzeugmaschine nach einem der voranstehenden Ansprüche, **dadurch gekennzeichnet, daß** eine das Fußelement (46) und die Führungsbasis (42) mit einer der Abhebekraft (FA) entgegenwirkenden Anziehungskraft (FU, FE) beaufschlagende Halteeinrichtung (140) vorgesehen ist.

17. Werkzeugmaschine nach Anspruch 16, **dadurch gekennzeichnet, daß** die Halteeinrichtung (140) berührungslos zwischen der Führungsbasis (42) und dem Fußelement (46) wirkt.

18. Werkzeugmaschine nach Anspruch 17, **dadurch gekennzeichnet, daß** die Halteeinrichtung (140) zwischen der Führungsbasis (42) und dem Fußelement (46) ein Unterdruckpolster (142) erzeugt.

19. Werkzeugmaschine nach Anspruch 18, **dadurch gekennzeichnet, daß** das Unterdruckpolster (142) durch eine Ausnehmung (144) im Fußelement (46) festgelegt ist.

20. Werkzeugmaschine nach Anspruch 19, **dadurch gekennzeichnet, daß** die Zuführungen (52) für das Gleitmedium um die Ausnehmung (144) herum angeordnet sind.

21. Werkzeugmaschine nach einem der Ansprüche 17 bis 20, **dadurch gekennzeichnet, daß** die Halteeinrichtung (140') die Anziehungskräfte (FE) durch magnetische Anziehung erzeugt.

22. Werkzeugmaschine nach Anspruch 21, **dadurch gekennzeichnet, daß** die Halteeinrichtung (140') mindestens einen Elektromagnet (150) umfaßt.

23. Werkzeugmaschine nach Anspruch 22, **dadurch gekennzeichnet, daß** die Halteeinrichtung (140') mindestens ein Primärteil (150) und mindestens ein Sekundärteil (152) aufweist, von denen eines in der Führungsbasis (42) und das andere in dem Fußelement (46) angeordnet ist.

24. Werkzeugmaschine nach Anspruch 23, **dadurch gekennzeichnet, daß** das mindestens eine Sekundärteil (152) im Fußelement (46) angeordnet ist und das mindestens eine Primärteil (150) in der Führungsbasis (42) angeordnet ist.

25. Werkzeugmaschine nach Anspruch 23 oder 24, **dadurch gekennzeichnet, daß** das Sekundärteil (152) mehrere Polelemente (156) umfaßt.

26. Werkzeugmaschine nach einem der Ansprüche 23 bis 25, **dadurch gekennzeichnet, daß** das Primärteil (150) mehrere Polelemente (154) umfaßt.

27. Werkzeugmaschine nach Anspruch 26, **dadurch gekennzeichnet, daß** die Polelemente (154) einzeln ansteuerbar sind.

28. Werkzeugmaschine nach einem der voranstehenden Ansprüche, **dadurch gekennzeichnet, daß** die Bearbeitungseinheit (20) und das Fußelement (46) durch eine Antriebseinrichtung (90, 160) in der zweidimensionalen Bewegungsebene (X/Z) bewegbar sind.

29. Werkzeugmaschine nach Anspruch 28, **dadurch gekennzeichnet, daß** die Antriebseinrichtung (90) stabkinematische Elemente (92, 94, 96) umfaßt, mit denen die Bearbeitungseinheit (20) in mindestens einer Bewegungsrichtung (X/Z) bewegbar ist.

30. Werkzeugmaschine nach Anspruch 29, **dadurch gekennzeichnet, daß** die Antriebseinrichtung (90) als zweidimensional wirksame stabkinematischer Antrieb (90) ausgebildet ist.

31. Werkzeugmaschine nach Anspruch 30, **dadurch gekennzeichnet, daß** der stabkinematische Antrieb (90) auf einer einem in Arbeitsstellung stehenden Werkzeug (22A) gegenüberliegenden Seite der Bearbeitungseinheit (20) angeordnet ist.

32. Werkzeugmaschine nach Anspruch 30 oder 31, **dadurch gekennzeichnet, daß** der stabkinematische Antrieb (90) gelenkig gelagerte und längenveränderbare Antriebsstreben (92, 94, 96) aufweist.

33. Werkzeugmaschine nach Anspruch 30 oder 31, **dadurch gekennzeichnet, daß** der stabkinematische Antrieb (90') gelenkig gelagerte längeninvariante, jedoch auf einer Linearführung (130) mit Schlitten (126, 128) relativ zueinander bewegbare Antriebsstreben (92', 94', 96') aufweist.

34. Werkzeugmaschine nach Anspruch 30 oder 31, **dadurch gekennzeichnet, daß** die mindestens ein Primärteil (150) und mindestens ein Sekundärteil (152) aufweisende Halteeinrichtung (140') als Linearantrieb der Antriebseinrichtung (160) betreibbar ist.

35. Werkzeugmaschine nach Anspruch 30 oder 31, **dadurch gekennzeichnet, daß** die mindestens ein Primärteil (150) und mindestens ein Sekundärteil (152) aufweisende Halteeinrichtung als zweidimensionale Antriebseinrichtung (160) betreibbar ist.

36. Werkzeugmaschine nach Anspruch 35, **dadurch gekennzeichnet, daß** mit der Antriebseinrichtung (160) die Bearbeitungseinheit (20) um eine senkrecht zur Basisführungsfläche (44) stehende Achse (162) drehbar ist.
